# EUROPEAN PATENT APPLICATION

(11) **EP 4 067 146 A1**
(43) Date of publication of application: **05.10.2022**
(21) Application number: 20891556.1
(22) Date of filing: 27.11.2020
(51) Int. Cl.: B60K 20/02, B60N 3/02, B60Q 3/20

(54) **GEAR SHIFTING ASSEMBLY AND AUTOMOBILE**

(30) Priority: 28.11.2019 CN 201911195385
(71) Applicant: Aiways Automobile Co., Ltd, Jiangxi 334000 (CN)
(72) Inventor: WANG, Xudong, Shangrao Jiangxi 334000 (CN)
(74) Representative: Osterhoff, Utz
(86) International application number: PCT/CN2020/132327
(87) International publication number: WO 2021/104466

(57) **Abstract**

Disclosed are a shift assembly and an automobile. The shift assembly is provided between a driver's seat (30) and a passenger seat (40) in a body (10) of an automobile and includes: a shift center console (20) connected to the body (10) and an arched handle (21) including a first connecting rod (211), a handle (212) and a second connecting rod (213). An extension direction of the handle (212) is parallel to a width direction of the body, the first connecting rod (211) is respectively connected to a first end of the handle (212) towards the driver's seat (30) and a first side of the shift center console (20), the second connecting rod (213) is respectively connected to a second end of the handle (212) towards the passenger seat (40) and a second side of the shift center console (20), a rotary shift member (214), which is provided around the handle (212), is rotatable coaxially around the handle (212), an outer peripheral surface of the handle (212) is provided with a plurality of gear contacts at different gears, an inner circumference of the rotary shift member (214) is provided with a selection contact in contact with one of the plurality of gear contacts, and the automobile is at different gears when the rotary shift member (214) rotates around the handle. The shift assembly integrates the functions of the auxiliary handle and the shift handle in the vehicle through the arched handle, thereby improving the safety and reducing the overall cost of the vehicle.

## Description

### CROSS-REFERENCE TO RELATED APPLICATIONS

This application claims priority to Chinese Patent Application No. 201911195385.0, filed on November 28, 2019, filed with the China National Intellectual Property Administration, and entitled "SHIFT ASSEMBLY AND AUTOMOBILE", the entire contents of which are incorporated herein by reference.

### TECHNICAL FIELD

The present disclosure relates to the field of automobile instrument assemblies, in particular, to a shift assembly and an automobile.

### BACKGROUND

In traditional automobiles, mechanical manual gears, mechanical electronic gears and electronic knob gears are usually provided on the shift center console, or electronic gears are provided on the steering wheel of the automobile to perform gear shifting. In the above structure, there will be no handle on the shift center console, and there is no part that can be held by the left hand of the copilot, which lacks safety.

Besides, the shift area, as the core area touched by the driver and the core use area of the automobile, has increasing requirements for function and appearance. The traditional shifting mechanism has a single function, a large module volume, and high requirements for layout. The larger module volume not only limits the installation of the instrument assembly, but also leads to longer man-hours.

Therefore, the present disclosure provides a shift assembly and an automobile.

### SUMMARY

In view of the above problem, the present disclosure provides a shift assembly and an automobile, to overcome or at least partially address, the above-mentioned problems.

The embodiments of the present disclosure provide a shift assembly, provided between a driver's seat and a passenger seat in a body of an automobile, including:
a shift center console connected to the body; and
an arched handle, including a first connecting rod, a handle and a second connecting rod,
an extension direction of the handle is parallel to a width direction of the body, the first connecting rod is respectively connected to a first end of the handle towards the driver's seat and a first side of the shift center console, the second connecting rod is respectively connected to a second end of the handle towards the passenger seat and a second side of the shift center console, a rotary shift member, which is provided around the handle, is rotatable coaxially around the handle, an outer peripheral surface of the handle is provided with a plurality of gear contacts at different gears, an inner circumference of the rotary shift member is provided with a selection contact in contact with one of the plurality of gear contacts, and the automobile is at different gears when the rotary shift member rotates around the handle.

In an embodiment, the rotary shift member is a cylindrical member, and a rotation axis of the cylindrical member is parallel to the width direction of the body.

In an embodiment, the rotary shift member is provided at an outer periphery located between a center of the handle and the first end of the handle, and a shift area is formed between the center of the handle and the first end of the handle;
an outer periphery located between a center of the handle and the second end of the handle is exposed, and a handle area is formed between the center of the handle and the second end of the handle.

In an embodiment, one end of the handle towards the driver's seat is provided with a park button, and a pressing stroke of the park button is parallel to the width direction of the body.

In an embodiment, the arched handle is located above the shift center console, and the arched handle is suspended from a side of the shift center console towards a front of the vehicle.

In an embodiment, the first connecting rod of the arched handle and the second connecting rod of the arched handle are clamped with a snap connector of the shift center console at multiple points.

In an embodiment, the first connecting rod of the arched handle and the second connecting rod of the arched handle are connected to a frame of the shift center console through screw threads at multiple points along an anti-gravity direction.

In an embodiment, a first cover plate is provided on an outer side of the first connecting rod away from the handle, a first ambient light is integrated based on the first cover plate, a second cover plate is provided on an outer side of the second connecting rod away from the handle, and a second ambient light is integrated based on the second cover plate.

In an embodiment, the plurality of gear contacts of the handle and the selection contact of the rotary shift member are respectively connected to a gearbox of the automobile through cables.

The embodiments of the present disclosure further provide an automobile, including the shift assembly as described above.

The purpose of the present disclosure is to provide a shift assembly and an automobile, which can integrate the functions of an auxiliary handle and a shift handle in the automobile through an arched handle. The arched handle replaces the function of the ceiling handle, is small in size, has low requirements for layout, is convenient to assemble, which improves safety and reduces the overall cost of the automobile.

### BRIEF DESCRIPTION OF THE DRAWINGS

Other features, objects and advantages of the present disclosure will become more apparent upon reading the detailed description of non-limiting embodiments with reference to the following drawings.
FIG. 1 is a schematic view of a first shift assembly being installed in an automobile according to an embodiment of the present disclosure.
FIG. 2 is a schematic view of the first shift assembly according to an embodiment of the present disclosure.
FIG. 3 is a perspective view of the first shift assembly according to an embodiment of the present disclosure.
FIG. 4 is a schematic view of the first shift assembly based on a driver's seat perspective according to an embodiment of the present disclosure.
FIG. 5 is a top view of FIG. 4.
FIG. 6 is a cross-sectional view taken along line A-A in FIG. 5.
FIG. 7 is a schematic view of the first arched handle based on a driver's seat perspective according to an embodiment of the present disclosure.
FIG. 8 is a perspective view of the first arched handle according to an embodiment of the present disclosure.
FIG. 9 is a schematic view of a second arched handle according to an embodiment of the present disclosure.

### Reference numerals

10 body
20 shift center console
30 driver's seat
40 passenger seat
21 arched handle
211 first connecting rod
212 handle
213 second connecting rod
214 rotary shift member
215 park button
216 snap connector
21A shift area
21B handle area

### DETAILED DESCRIPTION OF THE EMBODIMENTS

Example embodiments will now be described more fully with reference to the accompanying drawings. However, example embodiments can be embodied in various forms and should not be construed as limited to the embodiments set forth herein. Rather, these embodiments are provided so that this disclosure will be thorough and complete, and the concept of example embodiments will be fully conveyed to those skilled in the art. The same reference numerals in the drawings denote the same or similar structures, and thus their repeated descriptions will be omitted.

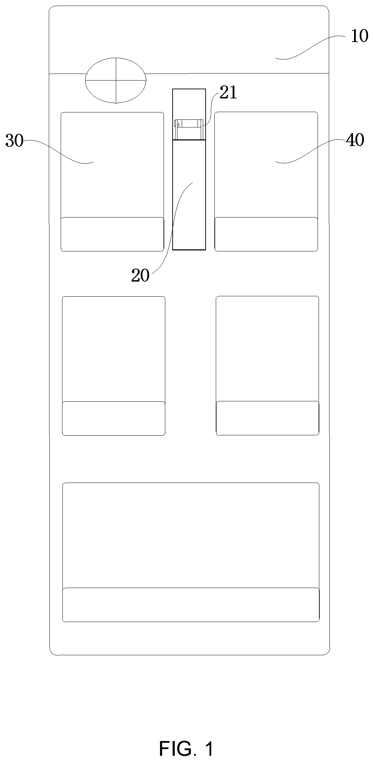

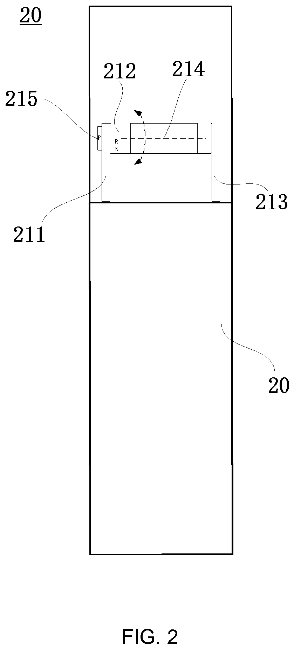

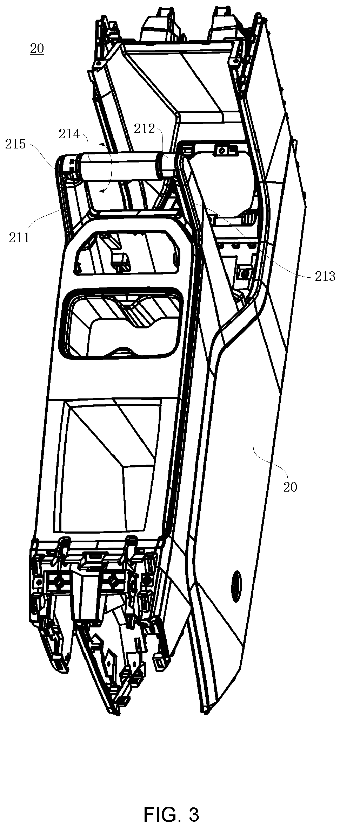

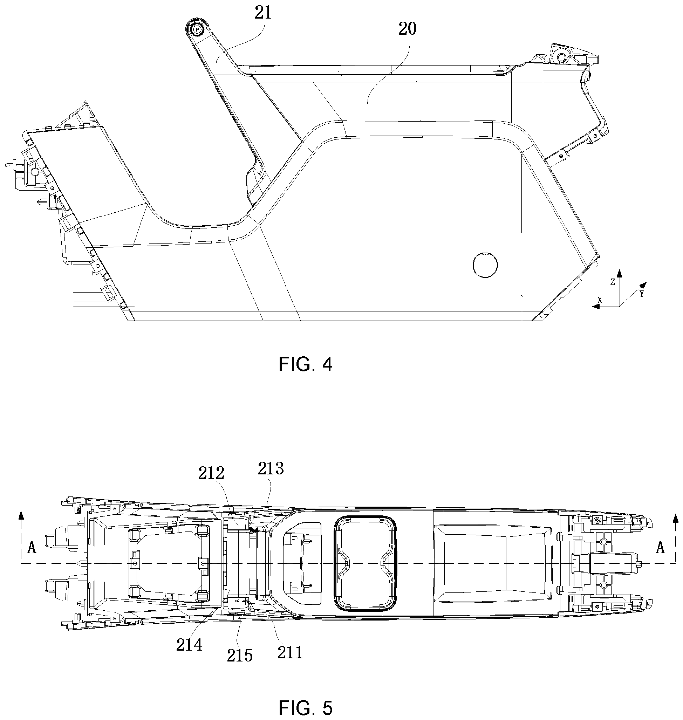

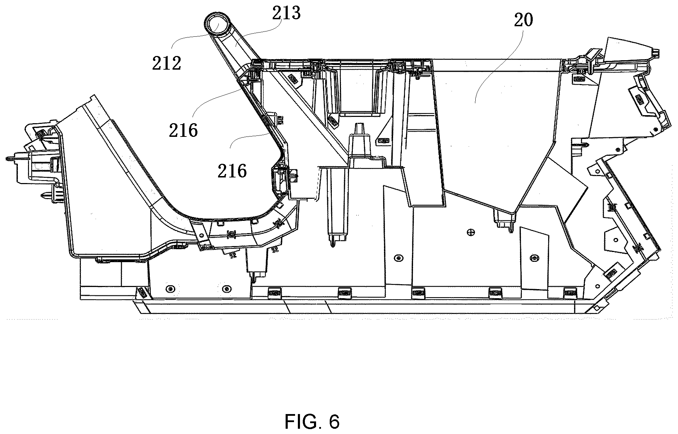

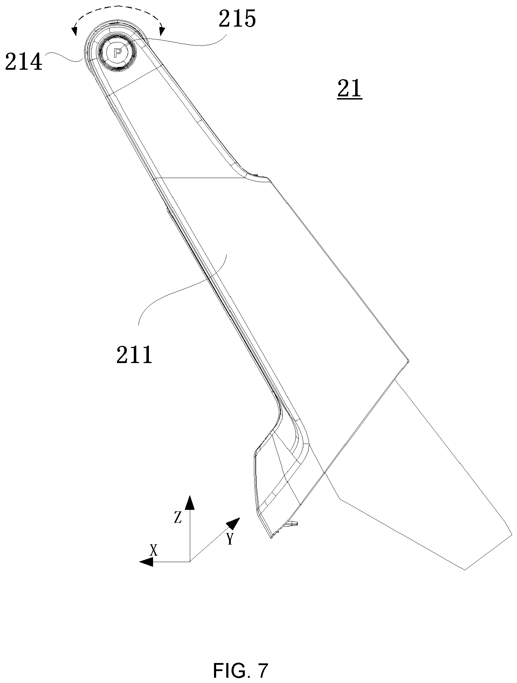

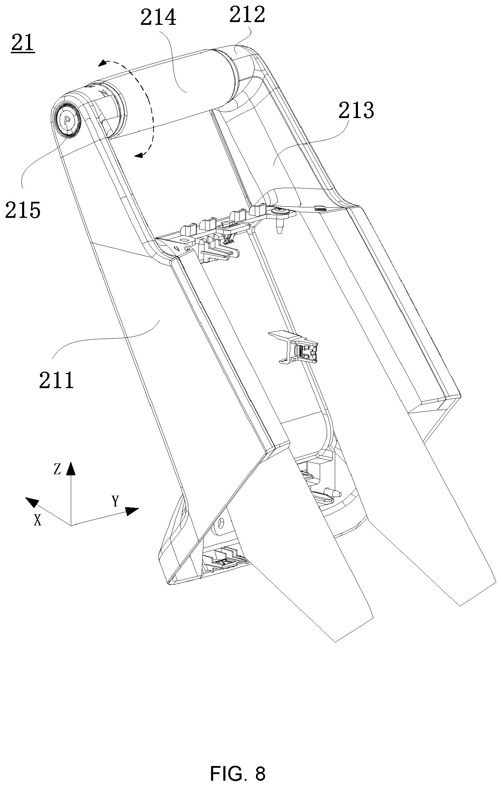

FIG. 1 is a schematic view of a first shift assembly being installed in an automobile according to an embodiment of the present disclosure. FIG. 2 is a schematic view of the first shift assembly according to an embodiment of the present disclosure. FIG. 3 is a perspective view of the first shift assembly according to an embodiment of the present disclosure. FIG. 4 is a schematic view of the first shift assembly based on a driver's seat perspective according to an embodiment of the present disclosure. FIG. 5 is a top view of FIG. 4. FIG. 6 is a cross-sectional view taken along line A-A in FIG. 5. FIG. 7 is a schematic view of the first arched handle based on a driver's seat perspective according to an embodiment of the present disclosure. FIG. 8 is a perspective view of the first arched handle according to an embodiment of the present disclosure. As shown in FIG. 1 to FIG. 8, X direction is a length direction of the body, Y direction is a width direction of the body, and Z direction is the anti-gravity direction. A shift assembly of the present disclosure is provided between a driver's seat 30 and a passenger seat 40 in a body 10 of an automobile. The shift assembly includes a shift center console 20 connected to the body 10 and an arched handle 21. The arched handle 21 includes a first connecting rod 211, a handle 212 and a second connecting rod 213. An extension direction of the handle 212 is parallel to a width direction Y of the body. The first connecting rod 211 is respectively connected to a first end of the handle 212 towards the driver's seat 30 and a first side of the shift center console 20. The second connecting rod 213 is respectively connected to a second end of the handle 212 towards the passenger seat 40 and a second side of the shift center console 20. A rotary shift member 214, which is provided around the handle 212, rotates coaxially around the handle 212. An outer peripheral surface of the handle 212 is provided with a plurality of gear contacts at different gears. An inner circumference of the rotary shift member 214 is provided with a selection contact in contact with one of the gear contacts. The automobile is at different gears when the rotary shift member 214 rotates around the handle 212. The rotary shift member 214 rotates around the handle 212 (similar to how a motorcycle accelerator operates), the shifting operation of the automobile can be achieved. The gear contacts of the handle 212 and the selection contacts of the rotary shift member 214 are respectively connected to the gearbox of the automobile by cables. In this embodiment, the rotary shift member 214 is a cylindrical member, and the rotation axis of the cylindrical member is parallel to the width direction of the body, which conforms to the natural holding habit of the driver's right palm, and improves user experience based on ergonomics.

The first connecting rod 211 of the arched handle 21 and the second connecting rod 213 of the arched handle 21 are clamped with a snap connector 216 of the shift center console 20 at multiple points. The first connecting rod 211 of the arched handle 21 and the second connecting rod 213 of the arched handle 21 are connected to a frame of the shift center console 20 through a screw thread at multiple points along the anti-gravity direction Z.

One end of the handle 212 towards the driver's seat 30 is provided with a park button 215, and a pressing stroke of the park button 215 is parallel to the width direction of the body. When the driver's right hand holds the rotary shift member 214, the right thumb naturally presses on the park button 215, which is more in line with the driver's natural holding habit of the right palm and right thumb. The user can completely control the integrated manipulation action of the park button 215 and the rotary shift member 214 in a natural holding posture, completely following ergonomics, and further improving the user experience.

The arched handle 21 is located above the shift center console 20, and the arched handle 21 is suspended from a side of the shift center console 20 towards a front of the vehicle. A first cover plate is provided on an outer side of the first connecting rod 211 away from the handle 212, and a first ambient light is integrated based on the first cover plate. A second cover plate is provided on an outer side of the second connecting rod 213 away from the handle 212, and a second ambient light is integrated based on the second cover plate.

The shift assembly of the present disclosure adopts high-modulus composite material instead of cast aluminum, which can reduce the cost while avoiding the pinching of the A surface, and can treat the appearance in various ways.

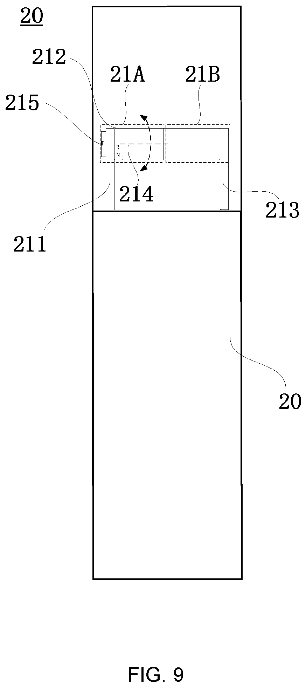

FIG. 9 is a schematic view of a second arched handle according to an embodiment of the present disclosure. As shown in FIG. 9, a second shift assembly of the present disclosure is provided between a driver's seat 30 and a passenger seat 40 in a body 10 of an automobile. The second shift assembly includes a shift center console 20 connected to the body 10 and an arched handle 21. The arched handle 21 includes a first connecting rod 211, a handle 212 and a second connecting rod 213. An extension direction of the handle 212 is parallel to a width direction of the body. The first connecting rod 211 is respectively connected to a first end of the handle 212 towards the driver's seat 30 and a first side of the shift center console 20. The second connecting rod 213 is respectively connected to a second end of the handle 212 towards the passenger seat 40 and a second side of the shift center console 20. A rotary shift member 214, which is provided around the handle 212, rotates coaxially around the handle 212. An outer peripheral surface of the handle 212 is provided with a plurality of gear contacts at different gears. An inner circumference of the rotary shift member 214 is provided with a selection contact in contact with one of the gear contacts. The automobile is at different gears when the rotary shift member 214 rotates along the handle 212. The gear contacts of the handle 212 and the selection contacts of the rotary shift member 214 are respectively connected to the gearbox of the automobile by cables. In this embodiment, the rotary shift member 214 is provided at an outer periphery located between a center of the handle 212 and the first end of the handle 212, and a shift area 21A is formed between the center of the handle 212 and the first end of the handle 212. The left portion of the handle 212 close to the driver's seat 30 can form a shift handle. An outer periphery located between a center of the handle 212 and the second end of the handle 212 is exposed, and a handle area 21B is formed between the center of the handle 212 and the second end of the handle 212. The right portion of the handle 212 close to the passenger seat 40 may form a handle for the passenger of the passenger seat 40 to hold. Other technical features are the same as before, and will not be repeated here.

As shown in FIG. 1, the present disclosure further provides an automobile, including the shift assembly as described above. Other technical features are the same as before, and will not be repeated here. The automobile of the present disclosure adopts a highly integrated shift electronic module to replace the traditional mechanical module. The arched handle integrates the decoration and the function of the auxiliary handle in the automobile, which can potentially replace the function of the ceiling handle and indirectly reduce the cost.

The arched handle of the integrated electronic shift module in the present disclosure needs to bear certain rigidity abuse requirements. The shell of the arched handle is made of aluminum alloy, which provides reliable new mechanical energy and can also satisfy the decorativeness through surface treatment methods such as wire drawing. The two sides of the arched handle are connected to the skeleton screw of the shift center console in the Y direction to ensure the mechanical performance. The bottom screw is connected to the body sheet metal and bracket screws to ensure that the stress on the cantilever handle is effectively transmitted to the body, and ensure that the local and overall rigidity and mode meet the design preset requirements. The first cover plate and the second cover plate are screw cover plates with integrated decorative function. It is possible to choose mainstream decorations such as spray painting, chrome plating, diaphragm, or the like, or integrate ambient lights, providing the possibility of optional interfaces and personalized customization for the market.

In summary, the purpose of the present disclosure is to provide a shift assembly and an automobile, which can integrate the functions of an auxiliary handle and a shift handle in the automobile through the arched handle. The arched handle replaces the function of the ceiling handle, is small in size, has low requirements for layout, is convenient to assemble, which improves safety and reduces the overall cost of the automobile.

The above content is a further detailed description of the present disclosure in conjunction with specific embodiments, and it cannot be considered that the specific implementation of the present disclosure is limited to these descriptions. For those of ordinary skill in the technical field to which the present disclosure pertains, without departing from the concept of the present disclosure, some simple deductions or substitutions can be made, which should be regarded as belonging to the protection scope of the present disclosure.

## Claims

1. A shift assembly, provided between a driver's seat (30) and a passenger seat (40) in a body (10) of an automobile, comprising:
a shift center console (20) connected to the body (10); and
an arched handle (21), comprising a first connecting rod (211), a handle (212) and a second connecting rod (213),
wherein an extension direction of the handle (212) is parallel to a width direction of the body, the first connecting rod (211) is respectively connected to a first end of the handle (212) towards the driver's seat (30) and a first side of the shift center console (20), the second connecting rod (213) is respectively connected to a second end of the handle (212) towards the passenger seat (40) and a second side of the shift center console (20), a rotary shift member (214), which is provided around the handle (212), is rotatable coaxially around the handle (212), an outer peripheral surface of the handle (212) is provided with a plurality of gear contacts at different gears, an inner circumference of the rotary shift member (214) is provided with a selection contact in contact with one of the plurality of gear contacts, and the automobile is at different gears when the rotary shift member (214) rotates around the handle (212).

2. The shift assembly of claim 1, wherein the rotary shift member (214) is a cylindrical member, and a rotation axis of the cylindrical member is parallel to the width direction of the body.

3. The shift assembly of claim 2, wherein the rotary shift member (214) is provided at an outer periphery located between a center of the handle (212) and the first end of the handle (212), and a shift area (21A) is formed between the center of the handle (212) and the first end of the handle (212);
an outer periphery located between a center of the handle (212) and the second end of the handle (212) is exposed, and a handle area (21B) is formed between the center of the handle (212) and the second end of the handle (212).

4. The shift assembly of claim 1, wherein one end of the handle (212) towards the driver's seat (30) is provided with a park button (215), and a pressing stroke of the park button (215) is parallel to the width direction of the body.

5. The shift assembly of claim 1, wherein the arched handle (21) is located above the shift center console (20), and the arched handle (21) is suspended from a side of the shift center console (20) towards a front of the vehicle.

6. The shift assembly of claim 1, wherein the first connecting rod (211) of the arched handle (21) and the second connecting rod (213) of the arched handle (21) are clamped with a snap connector (216) of the shift center console (20) at multiple points.

7. The shift assembly of claim 1, wherein the first connecting rod (211) of the arched handle (21) and the second connecting rod (213) of the arched handle (21) are connected to a frame of the shift center console (20) through screw threads at multiple points along an anti-gravity direction.

8. The shift assembly of claim 1, wherein a first cover plate is provided on an outer side of the first connecting rod (211) away from the handle (212), a first ambient light is integrated based on the first cover plate, a second cover plate is provided on an outer side of the second connecting rod (213) away from the handle (212), and a second ambient light is integrated based on the second cover plate.

9. The shift assembly of claim 1, wherein the plurality of gear contacts of the handle (212) and the selection contact of the rotary shift member (214) are respectively connected to a gearbox of the automobile through cables.

10. An automobile, comprising the shift assembly of any one of claims 1 to 9.
